# EUROPEAN PATENT APPLICATION

(11) **EP 4 534 224 A1**
(43) Date of publication of application: **09.04.2025**
(21) Application number: 24195767.9
(22) Date of filing: 22.08.2024
(51) Int. Cl.: B23B 27/16, B23B 27/10

(54) **FIXING MEMBER AND CUTTING TOOL**

(30) Priority: 06.10.2023 JP 2023174490
(71) Applicant: Tungaloy Corporation, Iwaki-shi, Fukushima 970-1144 (JP)
(72) Inventor: IDA, Takehiro, Fukushima, 9701144 (JP); FUJITA, Kento, Fukushima, 9701144 (JP); SAJI, Ryuichi, Fukushima, 9701144 (JP)
(74) Representative: Vossius & Partner Patentanwälte Rechtsanwälte mbB

(57) **Abstract**

The present invention provides a fixing member that presses and fixes a cutting insert disposed on an insert mounting part of a tool body, the fixing member including: a fixing member body that has a pressing part for pressing the cutting insert; a fitting protrusion that is provided so as to protrude from a bottom part of the fixing member body, the fitting protrusion being fitted in a fitting hole formed in the tool body; and an engagement recess formed in a peripheral surface of the fitting protrusion, the engagement recess being engaged with a leading end of a fastening screw which is screwed into an internal thread that communicates with the fitting hole of the tool body, wherein the fitting protrusion is drawn into the fitting hole by the fastening screw that engages with the engagement recess, whereby the pressing part presses and fixes the cutting insert.

## Description

### Background

### Field

The present invention relates to a fixing member and a cutting tool.

### Description of Related Art

A cutting tool for conducting a cutting process with respect to a workpiece includes a tool body, a cutting insert disposed in a mounting part of the tool body, and a fixing member that fixes the cutting insert onto the tool body (see WO2018/034339). In such cutting tool, a screw is inserted into a through hole formed in the fixing member and such screw is screwed and fastened into a screw hole of the tool body, whereby the fixing member presses and fixes the cutting insert onto the tool body.

Meanwhile, in the above-described cutting tool, since the through hole for allowing the screw to pass therethrough is formed in the fixing member, the fixing member has to be formed so as to have a sufficient thickness around the through hole in order to secure the strength thereof, and has to have a surface with a sufficient area with which a head part of the screw is engaged. Therefore, the fixing member has inevitably been large-sized.

### Summary

The present invention has been made under the above-described circumstances, and an object of the present invention is to provide a fixing member and a cutting tool which can be reduced in size while securing sufficient strength, and which are capable of fixing a cutting insert with high strength.

A fixing member according to an aspect of the present invention is a fixing member that presses and fixes a cutting insert disposed on an insert mounting part of a tool body, the fixing member including: a fixing member body that has a pressing part for pressing the cutting insert; a fitting protrusion that is provided so as to protrude from a bottom part of the fixing member body, the fitting protrusion being fitted in a fitting hole formed in the tool body; and an engagement recess formed in a peripheral surface of the fitting protrusion, the engagement recess being engaged with a leading end of a pressing member which is inserted into a hole part that communicates with the fitting hole of the tool body, the fixing member being configured such that the fitting protrusion is drawn into the fitting hole by the pressing member that engages with the engagement recess, whereby the pressing part presses and fixes the cutting insert.

The fixing member having the above-described configuration does not require a through hole for a screw to pass therethrough or a large surface to be engaged with a head part of a screw, and it is therefore possible to reduce the size of such fixing member. With such configuration, for example, it is possible to alleviate a cause of interference with a workpiece, etc. during a cutting process such as inner diameter cutting and to thereby broaden the region of application. In addition, it is also possible to increase a discharge space for chips and therefore reduce the frequency of sudden fracture caused by clogging of chips.

The engagement recess may be provided with a contact projection having a convex shape on a bottom part against which a leading end surface of the pressing member abuts.

The engagement recess may be formed at multiple locations in a circumferential direction of the fitting protrusion.

The hole part may be an internal thread, and a fastening screw may be screwed as the pressing member into the internal thread.

A cutting tool according to another aspect of the present invention includes: the above-described fixing member; a tool body having an insert mounting part on which the cutting insert is disposed and a fixing member mounting part with which the fixing member is assembled; and the cutting insert that is disposed on the insert mounting part and is pressed and fixed by the fixing member, in which the fixing member mounting part includes: a fitting hole in which a fitting protrusion of the fixing member is fitted; a hole part that communicates with an inner peripheral surface of the fitting hole; and a pressing member that is inserted into the hole part, so that a leading end thereof is engaged with an engagement recess of the fixing member.

### Brief Description of Drawings

Fig. 1 is a side view showing a cutting tool according to an embodiment.
Fig. 2 is a perspective view showing a leading end of the cutting tool according to the present embodiment.
Fig. 3 is a schematic side view showing a clamping location of the cutting insert.
Fig. 4 is a schematic perspective showing the clamping location of the cutting insert as viewed from the rear side thereof.
Fig. 5 is a perspective view showing a leading end of the tool body in a state in which a cutting insert is disposed on an insert mounting part.
Fig. 6 is a plan view showing the leading end of the tool body in a state in which the cutting insert is disposed on the insert mounting part.
Fig. 7 is a side view of a fixing member.
Fig. 8 is a perspective view of the fixing member.
Fig. 9 is a front view of the fixing member.
Fig. 10 is a perspective view of the fixing member as viewed from the rear and lower side thereof.
Fig. 11 is a perspective view showing the fixing member with a coil spring mounted on a leading end of a fitting protrusion, as viewed from the back surface side of the fixing member.
Fig. 12 is a plan view of the fixing member, which illustrates the shape of the fitting protrusion of the fixing member.
Fig. 13 is a perspective view of the fixing member, which illustrates an engagement state of a fastening screw with an engagement recess formed in the fitting protrusion of the fixing member.
Fig. 14 is a side view showing a part of the fixing member having a guiding projection on a front part of the fitting protrusion.

### Detailed Description

Embodiments of the present invention will be discussed in detail below, with reference to the attached drawings.

### (Cutting Tool)

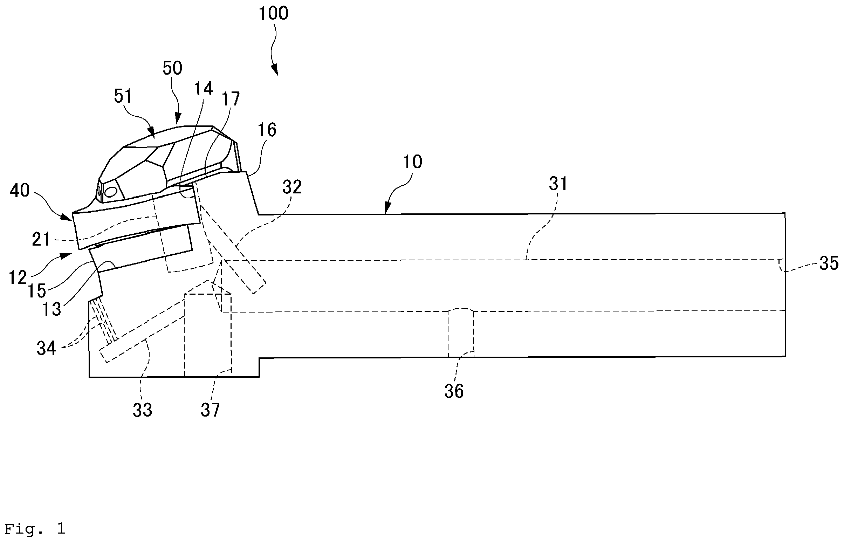

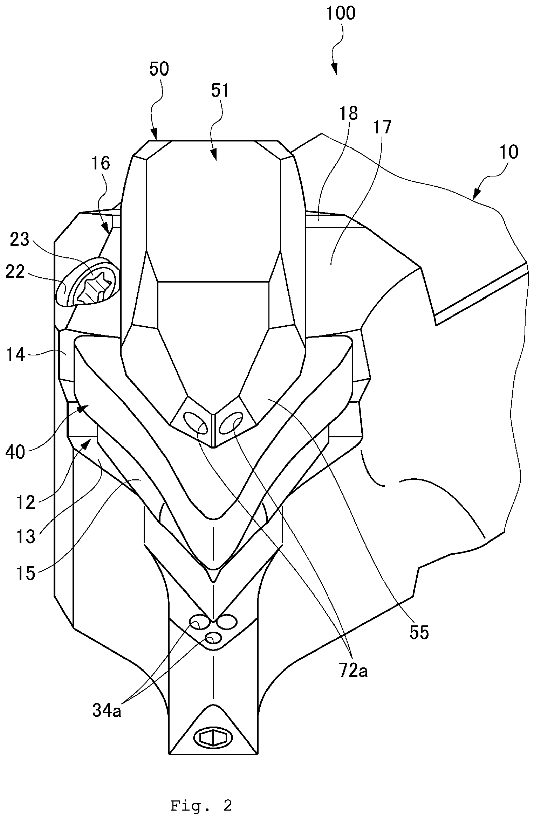

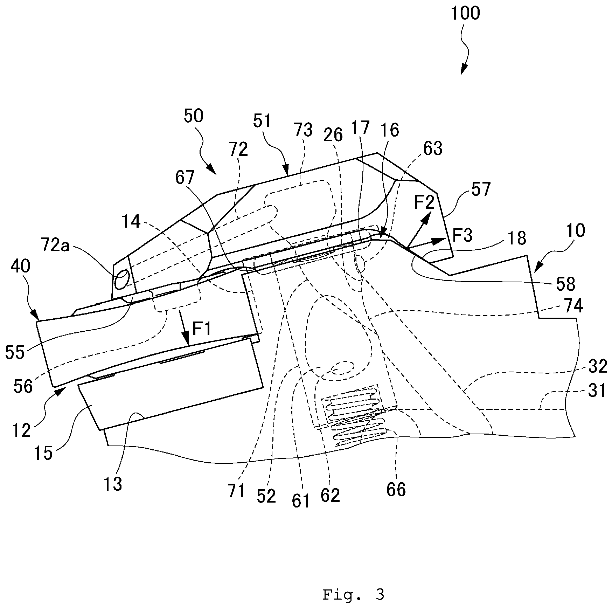

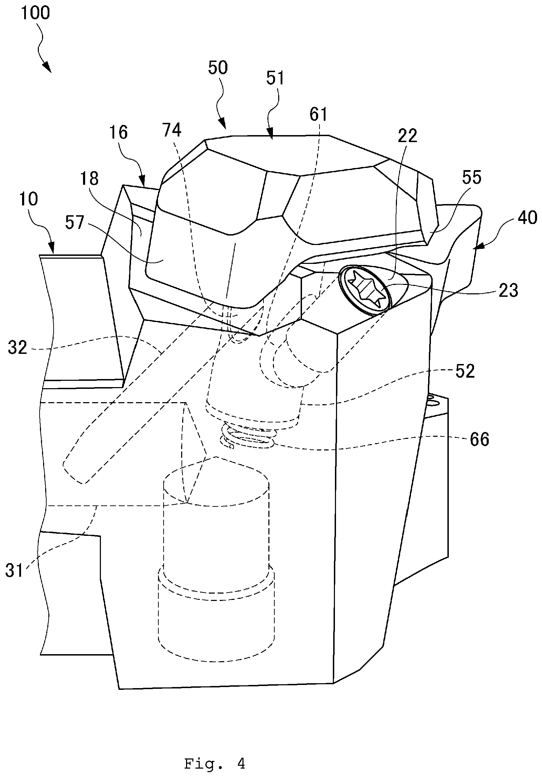

As shown in Figs. 1-4, a cutting tool 100 according to the present embodiment includes a tool body 10 and a cutting insert 40, and the tool body 10 includes a fixing member 50 and a fastening screw 23. In this cutting tool 100, the cutting insert 40 is mounted on a leading end of the tool body 10, and the cutting tool 100 is a turning tool that cuts the outer diameter or inner diameter of a rotating workpiece by using the cutting insert 40 provided on the leading end of the tool body 10. The cutting insert 40 is pressed and fixed by the fixing member 50 of the tool body 10.

### (Tool Body)

The tool body 10 is formed in a quadrangular prism shape, and the cutting insert 40 is mounted on a leading end of the tool body 10. The tool body 10 has, on the leading end thereof, an insert mounting part 12, and the cutting insert 40 is mounting on the insert mounting part 12. Such tool body 10 is formed of, for example, a metal material such as steel. The material of the tool body 10 may preferably be, for example, alloy tool steel (SKS5), die steel (SKD61) or maraging steel, which is elastic and resistant to plastic deformation. It should be noted that the shape of the tool body 10 is not limited to the quadrangular prism shape.

The insert mounting part 12 has a mounting surface 13 and a side wall surface 14 that is provided substantially perpendicularly on the rear side of the mounting surface 13. The cutting insert 40 is disposed on the mounting surface 13 of the insert mounting part 12 via a shim 15. It should be noted that the cutting insert 40 may be disposed on the mounting surface 13 without providing the shim 15 therebetween.

The tool body 10 has a fixing member mounting part 16 on the rear side of the insert mounting part 12, and the fixing member 50 is mounted on the fixing member mounting part 16. The fixing member mounting part 16 has a mounting surface 17 which is a flat surface formed continuously to the side wall surface 14 of the insert mounting part 12. In addition, the fixing member mounting part 16 also has a sliding surface 18 on the rear side of the mounting surface 17. The sliding surface 18 is an inclined surface which is gradually inclined downward from the mounting surface 17 side toward the rear side.

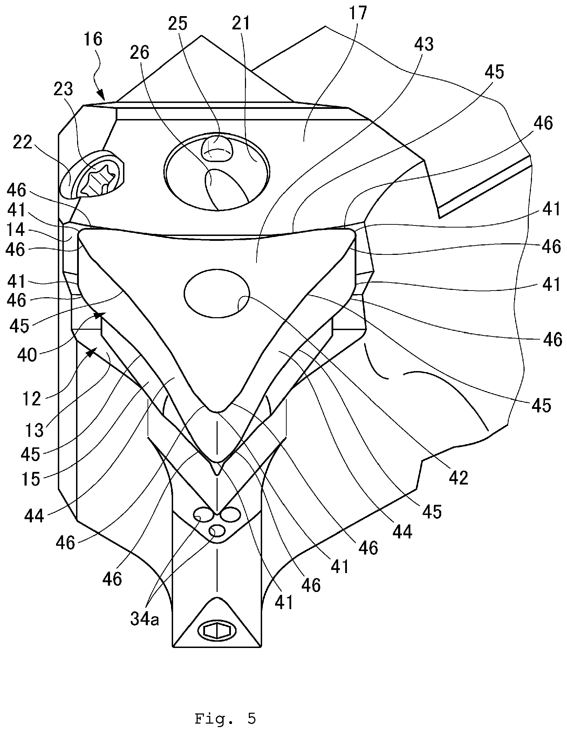

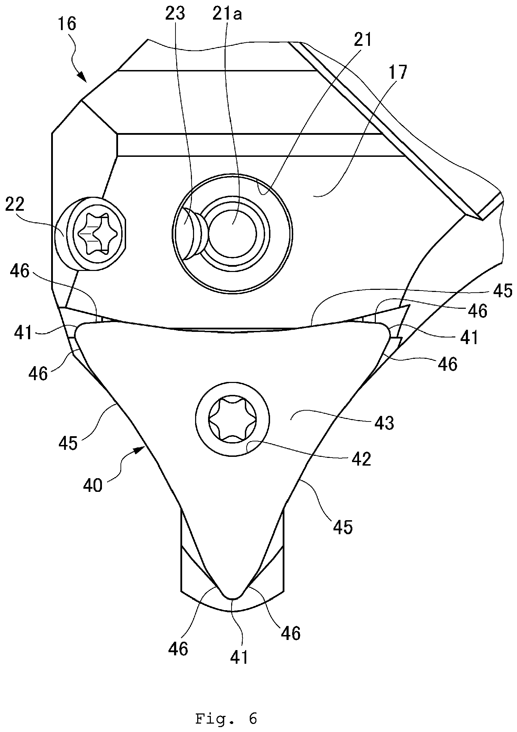

As shown in Figs. 5 and 6, the fixing member mounting part 16 has a fitting hole 21 and an internal thread (hole part) 22. The fitting hole 21 is formed so as to be perpendicular to the mounting surface 17. The internal thread 22 opens on a lateral side of the fitting hole 21 and is formed obliquely toward the fitting hole 21. The internal thread 22 communicates with an inner peripheral surface of the fitting hole 21. The fastening screw (pressing member) 23 is screwed into the internal thread 22 from above the fixing member mounting part 16, and a leading end of the fastening screw 23 is protruded into the fitting hole 21. A hexagon socket set screw may be used as the fastening screw 23. Although this example illustrates a structure in which the fastening screw 23 is screwed into the internal thread 22, a hole part that communicates with the fitting hole 21 may be provided in place of the internal thread 22, and a pressing member, such as a pin, may be inserted into such hole part by manipulating a cam or a lever.

A guide recess 25 is formed in the inner peripheral surface of the fitting hole 21. The guide recess 25 is provided on the opposite side of the insert mounting part 12 and formed in a concave shape. In addition, an outlet port 26 is formed in the inner peripheral surface of the fitting hole 21. The outlet port 26 is also provided on the opposite side of the insert mounting part 12 and provided on the lower side with respect to the guide recess 25.

As shown in Fig. 1, the tool body 10, which has on its leading end the insert mounting part 12 and the fixing member mounting part 16, has inside thereof a coolant main flow path 31, coolant branch flow paths 32 and 33, and a plurality of coolant discharge flow path 34.

The coolant main flow path 31 is formed along the longitudinal direction of the tool body 10. The coolant main flow path 31 has a plurality of inlet ports 35, 36 and 37. The inlet port 35 is formed in a rear end surface of the tool body 10, the inlet port 36 is formed in a bottom surface of the tool body 10 in the middle thereof in the longitudinal direction, and the inlet port 37 is formed in the bottom surface of the tool body 10 on the leading end side thereof. Coolant is supplied from one of these inlet ports 35, 36 and 37 into the coolant main flow path 31, and the inlet ports 35, 36 and 37 that are not used for supplying the coolant are closed by a hexagon socket set screw or the like.

The coolant branch flow path 32 is formed in an upper part of the leading end side of the tool body 10, and one end of the coolant branch flow path 32 communicates with the coolant main flow path 31. The other end of the coolant branch flow path 32 communicates with the fitting hole 21, with the opening portion thereof serving as the outlet port 26. The coolant which has been supplied into the coolant main flow path 31 is delivered into the coolant branch flow path 32. The fluid to be supplied into the coolant main flow path 31 is not limited to the coolant, and various types of lubricants and cooling agents may be used, or mist or air may alternatively be supplied.

The coolant branch flow path 33 is formed in a lower part of the leading end side of the tool body 10, and one end of the coolant branch flow path 33 communicates with the coolant main flow path 31. The other end of the coolant branch flow path 33 communicates with one end of each of the plurality of coolant discharge flow paths 34. The other end of each of the coolant discharge flow paths 34 opens near the leading end of the tool body 10, and such opening portion serves as a discharge port 34a. The coolant which has been supplied into the coolant main flow path 31 is delivered into the coolant branch flow path 33. The coolant which has been delivered into the coolant branch flow path 33 passes through the coolant discharge flow path 34 and is discharged from the discharge port 34a to cool and lubricate a region around a flank of the cutting insert 40.

### (Cutting Insert)

As shown in Figs. 5 and 6, the cutting insert 40 that is mounted on the insert mounting part 12 of the tool body 10 may be formed in, for example, a flattened, substantially triangular solid shape. The cutting insert 40 has front and back end surfaces 43, and each end surface 43 has three corner parts 41. The cutting insert 40 has a fixing hole 42 at the center thereof.

The cutting insert 40 includes: substantially triangular end surfaces 43 that face each other; and three peripheral side surfaces 44 connecting these end surfaces 43. In such cutting insert 40, a portion near each corner part 41 in an edge 45 between each end surface 43 and the peripheral side surface 44 serves as a cutting edge 46.

The cutting insert 40 is placed and fixed onto the insert mounting part 12 of the tool body 10 with one of the end surfaces 43 facing upward and any one of the three corner parts 41 facing the leading end side. By using the cutting insert 40 with any one of the three corner parts 41 each having the cutting edge 46 in each end surface 43 facing toward the leading end side, it is possible to provide cutting at six locations in total.

### (Fixing Member)

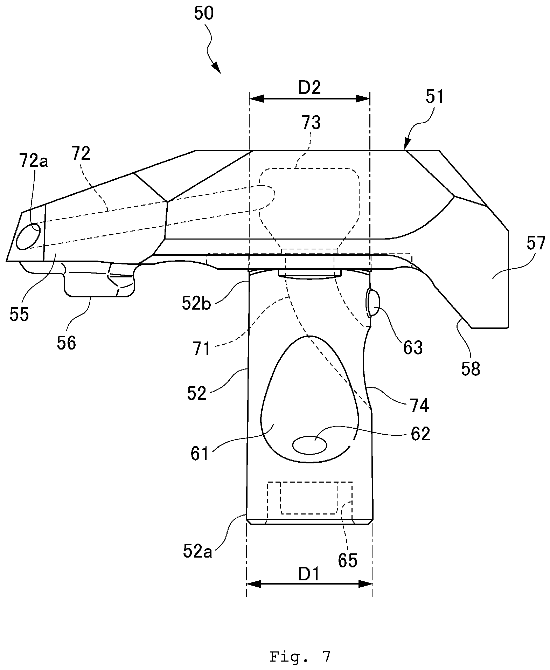

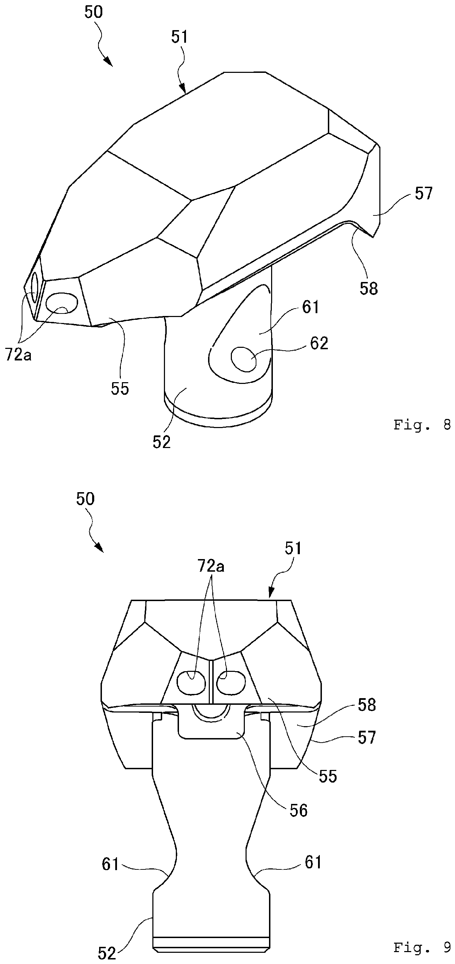

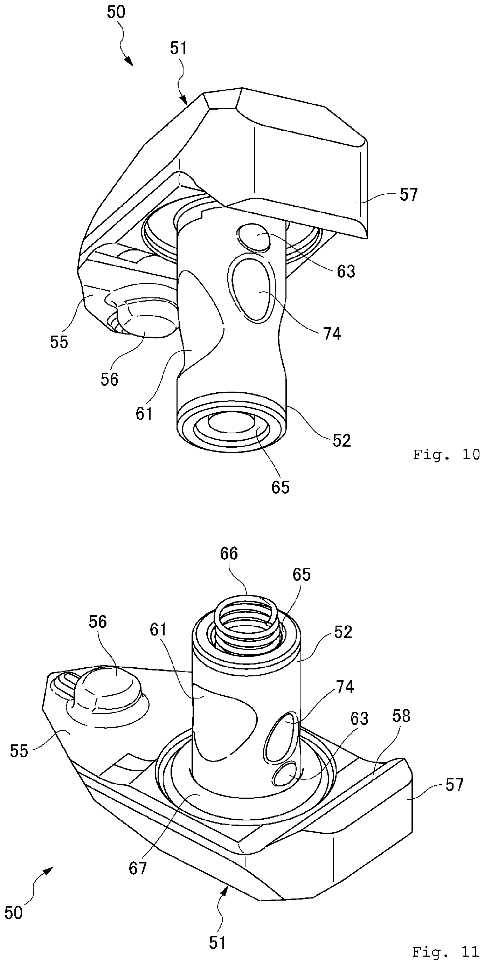

As shown in Figs. 7-11, the fixing member 50 has a fixing member body 51 and a fitting protrusion 52. The fitting protrusion 52 extends downward from a bottom part of the fixing member body 51.

In the fixing member body 51, a portion on the leading end side with respect to the fitting protrusion 52 serves as a pressing part 55, and such pressing part 55 is provided with a pressing protrusion 56 that protrudes downward. The pressing protrusion 56 is intended to fix the cutting insert 40, and the pressing protrusion 56 may have any shape as long as it can press the inner peripheral surface of the fixing hole 42 of the cutting insert. The fixing member body 51 has a sliding surface 58 on the rear end 57 side with respect to the fitting protrusion 52, the sliding surface 58 being gradually inclined backward as it extends downward.

The fitting protrusion 52 is formed in a columnar shape. The fitting protrusion 52 has engagement recesses 61 in opposite side portions thereof. Each engagement recess 61 is formed as a recess that is gradually inclined toward the center as it extends in the protruding direction of the fitting protrusion 52. A bottom part of the engagement recess 61 is provided with a contact projection 62 that is projected in a convex shape. A convex guide projection 63 is formed in a rear part of the fitting protrusion 52 in the vicinity of the base end thereof. The fitting protrusion 52 further has an annular recess 65 in the leading end thereof, and a coil spring 66 is fitted and mounted in such annular recess 65. An annular O ring 67 is mounted on a base end portion of the fitting protrusion 52.

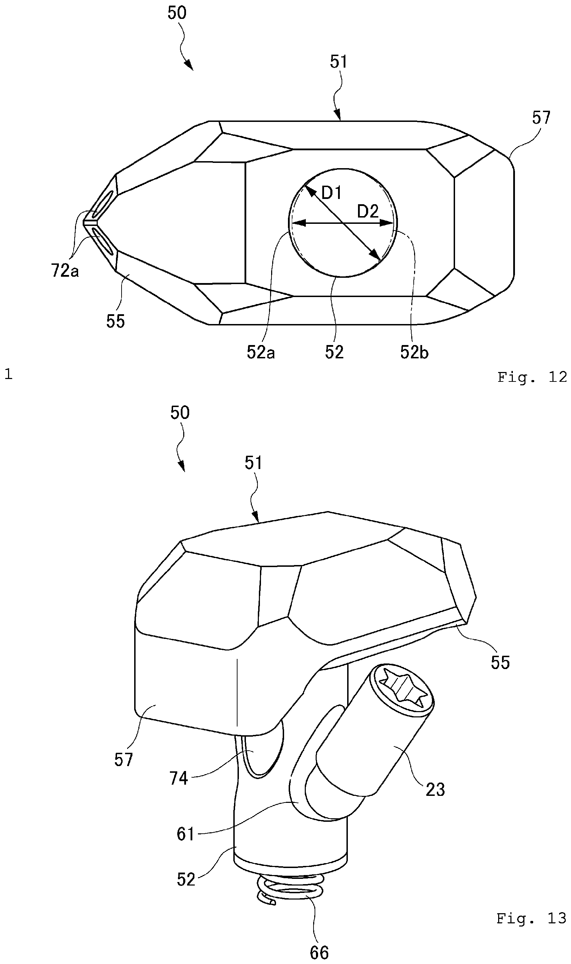

As shown in Fig. 12, the fitting protrusion 52 has a leading end 52a which is formed in a circular shape with an outer diameter D1. On the other hand, a base end 52b of the fitting protrusion 52 is formed in an elliptical shape having a long diameter D1 and a short diameter D2, with the short diameter direction aligning with the front-back direction of the fixing member 50. With such configuration, the fitting protrusion 52 is formed such that its dimension in the front-back direction gradually decreases from the leading end 52a toward the base end 52b.

The fixing member 50 has a coolant introduction flow path 71, a coolant discharge flow path 72, and a coolant reservoir 73. The coolant introduction flow path 71 has one end thereof opening at a rear portion of the fitting protrusion 52 on the leading end side with respect to the guide projection 63, with the opening portion serving as an inlet port 74. Such coolant introduction flow path 71 is formed so as to be curved while extending upward through the fitting protrusion 52 from the inlet port 74 toward the fixing member body 51. In this example, two coolant discharge flow paths 72 are formed. These coolant discharge flow paths 72 may be, for example, formed along the front-back direction so as to be arranged in parallel at the leading end of the fixing member body 51 and open at the leading end of the fixing member body 51. The opening portions of the respective coolant discharge flow paths 72 serve as discharge ports 72a. The coolant reservoir 73 is formed in the fixing member body 51 at a position above the fitting protrusion 52. The coolant reservoir 73 communicates with each of the coolant introduction flow path 71 and the coolant discharge flow path 72. The coolant reservoir 73 has a flow path whose cross-sectional area is larger than those of the coolant introduction flow path 71 and the coolant discharge flow path 72. It should be noted that the two coolant discharge flow paths 72 may not necessarily be arranged in parallel to each other.

### (Fixation of Cutting Insert)

The following description will now describe a case where the cutting insert 40 arranged on the insert mounting part 12 of the tool body 10 is fixed by the fixing member 50.

First, with respect to the tool body 10 in which the cutting insert 40 is disposed on the insert mounting part 12, the fitting protrusion 52 of the fixing member 50 is inserted in the fitting hole 21 of the fixing member mounting part 16, thereby allowing the fixing member body 51 to be positioned above the fixing member mounting part 16. The pressing protrusion 56 formed on the pressing member 55 of the fixing member body 51 is fitted into the fixing hole 42 of the cutting insert 40. At this time, the coil spring 66 on the leading end of the fitting protrusion 52 abuts against a bottom part 21 a of the fitting hole 21.

In such state, the fastening screw 23 is screwed into the internal thread 22 of the fixing member mounting part 16 of the tool body 10. As a result, as shown in Fig. 13, the leading end of the fastening screw 23 is protruded into the fitting hole 21 and inserted into one of the engagement recesses 61 formed in the fitting protrusion 52 and abuts against the contact projection 62 formed on the bottom part of the engagement recess 61. By further screwing such fastening screw 23, the fitting protrusion 52 is drawn into the fitting hole 21 against the biasing force of the coil spring 66 due to the fastening force of the fastening screw 23. As a result, the fixing member 50 is pressed against the fixing member mounting part 16 of the tool body 10. The cutting insert 40 is consequently pressed by the pressing part 55 of the fixing member 50 against the shim 15 of the insert mounting part 12 of the tool body 10 with a pressing force F1.

When the fixing member 50 is pressed against the fixing member mounting part 16, the sliding surface 58 of the fixing member body 51 slides in contact with the sliding surface 18 of the tool body 10. As a result, the fixing member 50 is attracted toward the rear side of the tool body 10 by a component force F3 of a reaction force F2 from the sliding surface 18 of the tool body 10. With such configuration, the pressing protrusion 56 that is being fitted in the fixing hole 42 of the cutting insert 40 is moved backward while abutting against the inner peripheral surface of the fitting hole 42. Accordingly, the cutting insert 40 is attracted toward the rear side of the insert mounting part 12 of the tool body 10 by the pressing protrusion 56 of the fixing member 50 and pressed against the side wall surface 14. In this way, the cutting tool 100 has a double clamp fixing system in which two locations of the cutting insert 40 (i.e., the upper end surface 43 of the cutting insert 40 and the inner peripheral surface of the fixing hole 42) are pressed by the fixing member 50.

Here, the fitting protrusion 52 of the fixing member 50 is formed such that the dimension of the elliptical base end 52b in the front-back direction is smaller than that of the leading end 52a. Thus, a gap is formed between the fitting protrusion 52 and the fitting hole 21 in the front-back direction of the fixing member 50, such that the size of the gap gradually increases toward the base end 52b of the fitting protrusion 52. With such configuration, when the fitting protrusion 52 is drawn into the fitting hole 21 by the fastening screw 23, the fixing member 50 is smoothly displaced toward the rear side of the tool body 10. The fitting protrusion 52 may be formed, throughout its length, in an elliptical shape whose short diameter direction aligns with the front-back direction of the fixing member 50. In such case, by forming the fitting protrusion 52 such that the short diameter of the base end 52b side is smaller than the short diameter of the leading end 52a side, it is possible to form a gap between the fitting protrusion 52 and the fitting hole 21 in the front-back direction of the fixing member 50, such that the size of the gap gradually increases toward the base end 52b of the fitting protrusion 52, and it is therefore possible to smoothly displace the fixing member 50 that is being fitted in the fitting hole 21 toward the rear side of the tool body 10.

In the clamped state where the cutting insert 40 is fixed onto the insert mounting part 12, the guide projection 63 formed on the fitting protrusion 52 of the fixing member 50 is fitted in the guide recess 25 formed in the fitting hole 21 of the tool body 10. As a result, the fixing member 50 is prevented from being rotated around the axis of the fixing protrusion 52 of the fixing member 50, due to the guide projection 63 and the guide recess 25 that are being fitted with each other. Accordingly, the movement of the fixing member 50 is restricted during the cutting process by the cutting insert 40 of the cutting tool 100, which allows the cutting insert 40 to perform a preferable cutting process.

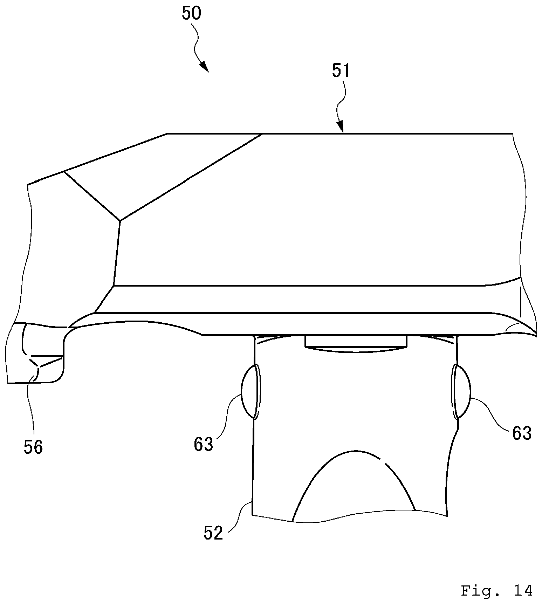

As shown in Fig. 14, the fitting protrusion 52 of the fixing member 50 may also be provided with a guide projection 63 on a front part of the fitting protrusion 52. In such case, a guide recess 25 that can be fitted with the guide projection 63 provided on the front part of the fitting protrusion 52 is provided on the insert mounting part 12 side in the fitting hole 21. With such configuration, it is possible to further enhance the effect of preventing the fixing member 50 from rotating around the axis of the fitting protrusion 52.

In the clamped state where the cutting insert 40 is fixed onto the insert mounting part 12, the O ring 67 mounted on the base end of the fitting protrusion 52 of the fixing member 50 is attached tightly to the mounting surface 17 of the fixing member mounting part 16 of the tool body 10. Such configuration provides a sealing between the bottom part of the fixing member 50 and the mounting surface 17 of the fixing member mounting part 16.

In addition, in the clamped state where the cutting insert 40 is fixed onto the insert mounting part 12, the inlet port 74 of the coolant introduction flow path 71 formed in the fitting protrusion 52 of the fixing member 50 communicates with the outlet port 26 of the coolant branch flow path 32 formed in the fitting hole 21 of the tool body 10. With such configuration, coolant that is delivered from the coolant main flow path 31 into the coolant branch flow path 33 is delivered into the coolant introduction flow path 71 of the fixing member 51. The coolant which has been delivered into the coolant introduction flow path 71 is then delivered into the coolant discharge flow path 72 via the coolant reservoir 73 and discharged from the discharge port 72a at the leading end of the fixing member 50. As a result, the coolant discharged from the discharge port 72a at the leading end of the fixing member 50 is sprayed onto a cutting location by the cutting insert 40, together with the coolant discharged from the discharge port 34a at the leading end of the tool body 10. With such configuration, the cutting location that is cut by the cutting insert 40 can be appropriately cooled and lubricated. Here, the coolant reservoir 73 having a flow path with a large cross-sectional area is provided between the coolant introduction flow path 71 and the coolant discharge flow path 72. Accordingly, it is possible to prevent a pressure loss of the coolant in the process of being delivered from the coolant introduction flow path 71 into the coolant discharge flow path 72 having a small inner diameter, and to thereby appropriately discharge the coolant from the discharge port 72a.

### (Removal of Cutting Insert)

The following description will now describe a case of the removal of the cutting insert 40 which has been fixed onto the insert mounting part 12 of the tool body 10 by the fixing member 50.

First, in order to remove the cutting insert 40, the fastening screw 23 that fixes the fixing member 50 is loosened. Then, the fastening screw 23 is pulled out from the engagement recess 61 of the fixing member 50. As a result, the fixing member 50 is pushed up in a direction away from the fixing member mounting part 16 of the tool body 10 due to the resilient force of the coil spring 66 provided on the leading end of the fitting protrusion 52. As a result, the fixation of the cutting insert 40 by the fixing member 50 is released. In this way, when the fixing member 50 is pushed up by the coil spring 66, the guide projection 63 of the fitting protrusion 52 which has been fitted in the guide recess 25 in the fitting hole 21 is slid along the guide recess 25. As a result, the rear portion of the fixing member 50 is guided along the contact surface between the guide projection 63 and the guide recess 25, whereby the rear portion of the fixing member 50 is smoothly pushed up. Accordingly, the fixing member 50 whose rear portion has been pushed up from the fixing member mounting part 16 of the tool body 10 can easily be grasped and removed.

As explained above, the fixing member 50 according to the present embodiment does not require a through hole for a screw to pass therethrough or a large surface to be engaged with a head part of the screw, and it is therefore possible to reduce the size of such fixing member 50. With such configuration, it is possible to, for example, alleviate a cause of interference with a workpiece, etc. during a cutting process, such as inner diameter cutting, and thereby broaden the region of application. In addition, it is also possible to increase a discharge space for chips and therefore reduce the frequency of sudden fracture caused by clogging of chips.

In addition, since the leading end surface of the fastening screw 23 abuts against the contact projection 62 having a convex shape, it is possible to transmit the fastening force of the fastening screw 23 to the fitting protrusion 52 without any bias and thereby draw the fitting protrusion 52 into the fitting hole 21.

Furthermore, since the engagement recesses 61 are formed at multiple locations (two locations on opposite sides in this example) in the circumferential direction of the fitting protrusion 52, it is possible to use any of those engagement recesses 61 so as to fit the situation, and is therefore possible to achieve availability for both right- and left-hand applications.

According to the present invention, it is possible to provide a fixing member and a cutting tool that can achieve size reduction while securing sufficient strength and can further achieve fixation of a cutting insert with high strength.

## Claims

1. A fixing member that presses and fixes a cutting insert disposed on an insert mounting part of a tool body, the fixing member comprising:
a fixing member body that has a pressing part for pressing the cutting insert;
a fitting protrusion that is provided so as to protrude from a bottom part of the fixing member body, the fitting protrusion being fitted in a fitting hole formed in the tool body; and
an engagement recess formed in a peripheral surface of the fitting protrusion, the engagement recess being engaged with a leading end of a pressing member which is inserted into a hole part that communicates with the fitting hole of the tool body,
wherein the fitting protrusion is drawn into the fitting hole by the pressing member that engages with the engagement recess, whereby the pressing part presses and fixes the cutting insert.

2. The fixing member according to claim 1, wherein the engagement recess is provided with a contact projection having a convex shape on a bottom part against which a leading end surface of the pressing member abuts.

3. The fixing member according to claim 1 or 2, wherein the engagement recess is formed at multiple locations in a circumferential direction of the fitting protrusion.

4. The fixing member according to any one of claims 1 to 3, wherein the hole part is an internal thread, and a fastening screw is screwed as the pressing member into the internal thread.

5. A cutting tool, comprising
the fixing member according to any one of claims 1 to 4;
a tool body having an insert mounting part on which a cutting insert is disposed and a fixing member mounting part with which the fixing member is assembled; and
the cutting insert that is disposed on the insert mounting part and is pressed and fixed by the fixing member,
wherein the fixing member mounting part includes:
a fitting hole in which a fitting protrusion of the fixing member is fitted;
a hole part that communicates with an inner peripheral surface of the fitting hole; and
a pressing member that is inserted into the hole part, so that a leading end thereof is engaged with the engagement recess of the fixing member.
